(19)

**Europäisches Patentamt**

**European Patent Office**

**Office européen des brevets**

(11) **EP 4 714 703 A1**

(12) **EUROPEAN PATENT APPLICATION**

(43) Date of publication:
25.03.2026  Bulletin 2026/13

(21) Application number: 25203086.1

(22) Date of filing: 18.09.2025

(51) International Patent Classification (IPC):
B60K 6/24 *(2007.10)*　　B60K 1/02 *(2006.01)*
B60K 5/08 *(2006.01)*　　B60K 6/40 *(2007.10)*
B60K 6/46 *(2007.10)*　　B60K 7/00 *(2006.01)*
B60K 13/02 *(2006.01)*　　B60K 13/04 *(2006.01)*
B60K 15/063 *(2006.01)*　　B60W 20/15 *(2016.01)*
B60K 5/00 *(2006.01)*

(52) Cooperative Patent Classification (CPC):
B60K 6/24; B60K 1/02; B60K 5/08; B60K 6/40;
B60K 6/46; B60W 10/06; B60W 20/15;
B60W 20/17; B60K 2005/003

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **19.09.2024  IT 202400020938**

(71) Applicant: **FERRARI S.p.A.**
**41100 Modena (IT)**

(72) Inventor: **FAVARETTO, Fabrizio**
**41100 Modena (IT)**

(74) Representative: **Studio Torta S.p.A.**
**Via Viotti, 9**
**10121 Torino (IT)**

(54) **METHOD TO CONTROL A SERIES HYBRID CAR AND CORRESPONDING SERIES HYBRID CAR**

(57)　A method to control car (1) having: at least one electric motor (6) connected to the two drive wheels (4); a first generation assembly (7) having a first electric generator (9) and a first internal combustion engine (8) provided with a first drive shaft (11), which is mechanically connected only to the first electric generator (9); and a second generation assembly (7) having a second electric generator (9), which is mechanically independent of the first electric generator (9), and a second internal combustion engine (8) provided with a second drive shaft (11), which is mechanically connected only to the second electric generator (9). The control method comprises the steps of: controlling the two internal combustion engines (8) in a synchronous manner so as to cause the two internal combustion engines (8) to rotate at the same rotation speed ($\omega_E$) in order to obtain a regular sound generation; or controlling the two internal combustion engines (8) in an asynchronous manner so as to cause the two internal combustion engines (8) to rotate at different rotation speeds ($\omega_E$) in order to obtain an irregular sound generation.

Fig. 1

Processed by Luminess, 75001 PARIS (FR)

**Description**

CROSS-REFERENCE TO RELATED APPLICATIONS

This patent application claims priority from Italian patent application no. 102024000020938 filed on September 19, 2024, the entire disclosure of which is incorporated herein by reference.

TECHNICAL FIELD

The invention relates to a method to control a series hybrid car and to a corresponding series hybrid car.

PRIOR ART

A hybrid car is provided with a drive system with two or more components, typically (at least) an electric motor and a combustion engine, which work in combination with one another.

The most widespread architecture of a hybrid car is the parallel hybrid setup, in which both the electric motor and the combustion engine can provide torque to the drive wheels.

A different architecture has also been proposed, called a series hybrid setup, in which the combustion engine is not connected to the drive wheels but is only connected to an electric generator and, therefore, has the sole task of generating electrical energy to power the electric motor that rotates the drive wheels. An electrical energy storage system is normally provided, in which both the electrical energy generated by the electric motor during regenerative braking and the electrical energy generated as an excess (relative to the actual absorption of the electric motor) by the electric generator connected to the combustion engine are stored; in this way, there is an electrical energy reserve in the storage system, which can be used by the combustion engine during strong accelerations (therefore, the assembly consisting of the combustion engine and the electric generator can be undersized relative to the maximum power that can be absorbed by the electric motor, as the difference is supplied by the storage system). A series hybrid setup normally uses a combustion engine (such as a turbine engine), which has a very narrow operating range and, therefore, achieves a higher efficiency than conventional combustion engines; obviously, the combustion engine is always operated at maximum energy efficiency. Overall, the series hybrid setup is energy efficient especially when the speed of the vehicle changes continuously (as in city driving or circuit driving) while it is less energy efficient than a parallel hybrid or a vehicle provided with a purely thermal engine when the same speed is maintained for a long time (as in highway driving). Overall, the series hybrid setup is energy-efficient especially when the vehicle speed is continuously changing (as in city driving or track driving), whereas it is less energy-efficient than a parallel hybrid setup or a vehicle provided with a purely combustion powertrain when the same speed is maintained for a long time (as in highway driving). However, the series hybrid setup is suitable only for use in work vehicles or in small cars with no sporting ambitions, since the sensations it conveys to the driver - particularly the acoustic ones - are decidedly unpleasant and scarcely engaging, i.e. the very opposite of what is expected by the driver of a sports car.

Patent application WO9307016A1 describes a vehicle with two electric generators, which are operated independently of one another by two internal combustion engines and are powered by electric motors connected to the drive wheels.

Patent application DE102010007996A1 discloses a vehicle equipped with two internal combustion engines, whose drive shafts are coupled to one another by means of an epicyclic gear train.

Patent application DE102009035559A1 describes a vehicle provided with an internal combustion engine equipped with two cylinder banks, each having a drive shaft of its own; the two drive shafts can be connected to one another through a clutch that can be disengaged.

DESCRIPTION OF THE INVENTION

The object of the invention is to provide a method to control a series hybrid car and a corresponding series hybrid car, which do not suffer from the drawbacks described above and, therefore, exhibit sporty road performances.

According to the invention, there are provided a method to control a series hybrid car and a corresponding series hybrid car as claimed in the appended claims.

The appended claims describe preferred embodiments of the invention and form an integral part of the description.

BRIEF DESCRIPTION OF THE DRAWINGS

The invention will now be described with reference to the accompanying drawings, which show some non-limiting embodiments thereof, wherein:

- figure 1 is a schematic view of a series hybrid car according to the invention; and

- figure 2 is a schematic view of a generation assembly of the car of figure 1;

- figures 3, 4 and 5 are a perspective view, a top view and a bottom view, respectively, of a rear part of the car of figure 1 with parts removed for greater clarity;

- figures 6 and 7 are a perspective view and a top view, respectively, of two generation assemblies of the car of figure 1;

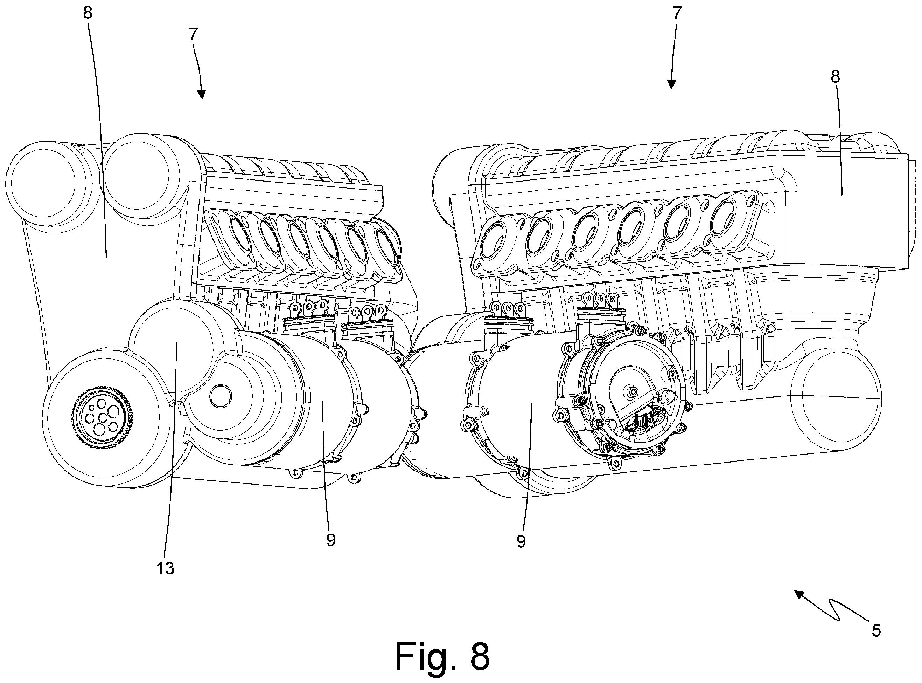

- figure 8 is a further perspective view, with parts removed for greater clarity, of the two generation assemblies of figures 6 and 7;

- figure 9 is a schematic view of some components of the car of figure 1;

- figure 10 is a schematic view of the two generation assemblies of figures 6 and 7, highlighting the lubrication circuits of internal combustion engines;

- figures 11, 12 and 13 are two perspective views and a top view, respectively, of a variant of the two generation assemblies of figures 6 and 7;

- figures 14 and 15 are two schematic views of the two generation assemblies of figures 6 and 7, highlighting the cooling circuits of internal combustion engines and according to two alternative embodiments.

PREFERRED EMBODIMENTS OF THE INVENTION

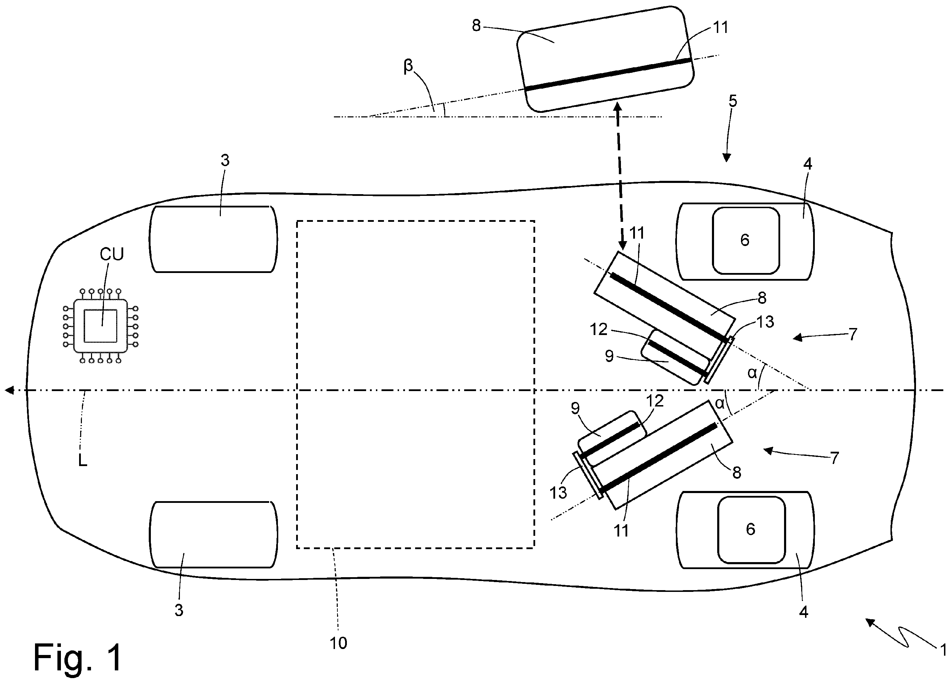

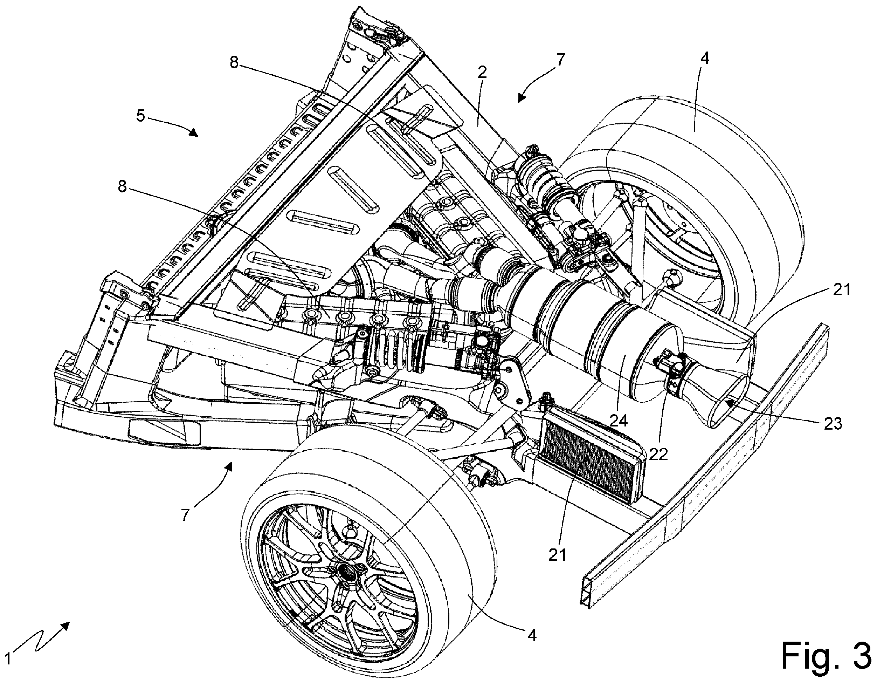

In figure 1, reference number 1 indicates, as a whole, a car provided with a frame 2 (partially shown in figures 3, 4 and 5), which supports two driven front wheels 3 and two rear drive wheels 4. The frame 2 (hence, the car 1) develops along a longitudinal direction L, which has a front-rear orientation and also represents the moving direction of the car, namely it represents the travelling direction of the car.

The car 1 comprises a series hybrid drive system 5 comprising two reversible electric motors 6 (i.e. which can work both as an electric motor, absorbing electrical energy and generating a mechanical drive torque, and as an electric generator, absorbing mechanical energy and generating electrical energy), which are coupled to the corresponding rear drive wheels 4 and are configured to apply a drive torque to the rear drive wheels 4 or to apply a braking torque to the rear drive wheels 4. In other words, the two electric motors 6 are mainly used as motors, but in case of slowdown of the car 1 they can also be used as generators.

In the embodiment shown in the accompanying figures, only the two rear wheels 4 are drive wheels (namely, they are coupled to the two electric motors 6); according to other embodiments which are not shown herein, only the two front wheels 3 are drive wheels (namely, they are coupled to the two electric motors 6) or all four wheels 3 and 4 are drive wheels (namely, they are coupled to four respective electric motors 6).

In the preferred embodiment shown in the accompanying figures, each electric motor 6 is located inside a respective rear drive wheel 4, namely it occupies the central space around which the respective rear drive wheel 4 rotates. According to a different embodiment which is not shown herein, the electric motors 6 are located outside the rear drive wheels 4.

The drive system 5 further comprises two generation assembly 7, each comprising an internal combustion engine 8 (namely, a heat engine), which is connected to a respective reversible electric generator 9 (namely, which can work both as an electric generator, absorbing mechanical energy and generating electrical energy, and as an electric motor, absorbing electrical energy and generating a mechanical torque). In other words, in each generation assembly 7, the electric generator 9 is mainly used as a generator, but it can occasionally also be used as a motor (for example, upon starting of the internal combustion engine 8).

The two generating assemblies 7 are mechanically completely separate from and independent of one another, namely they do not have any type of mechanical connection between them.

The drive system 5 comprises an electrical energy storage device 10 provided with chemical batteries, which is preferably located in a central position inside the floorboard of the car 1. The function of the storage device 10 is to store the electrical energy generated by the electric motors 6 during regenerative braking (namely, during the slowdown phases of the car 1) and, if necessary, also the electrical energy (occasionally) generated as an excess by the two generation assemblies 7.

Each electric motor 6 is controlled by a respective AC/DC electronic power converter (namely, an "inverter"), which is connected to the storage device 10, and, similarly, each electric generator 9 is controlled by a respective AC/DC electronic power converter (namely, an "inverter"), which is connected to the storage device 10; in particular, each electronic power converter is a directional converter and comprises a direct current side, which is connected to the storage device 10, and a three-phase alternating current side, which is connected to an electric motor 6 or to an electric generator 9.

Each internal combustion engine 8 comprises a drive shaft 11 which is firmly connected to a shaft 12 of the corresponding electric generator 9 by means of a transmission device 13 having a fixed gear ratio. Namely, no clutch (which can separate the connection) and no gearbox or other type of variator (which can change the gear ratio) is interposed between the drive shaft 11 of each internal combustion engine 8 and the shaft 12 of the corresponding electric generator 9. According to a preferred embodiment, each transmission device 13 comprises a gear train and, in particular, a side gear wheel integral to the drive shaft 11 of the respective internal combustion engine 8, another side gear wheel integral to the shaft 12 of the respective electric generator 9 and a central gear wheel, which is mounted in an idle manner, is arranged between the two side gear wheels and meshes with both side gear wheels.

According to a preferred embodiment, in each generation assembly 7, the shaft 12 of the electric generator 9 is parallel and not coaxial to the drive shaft 11 of the internal combustion engine 8 and is connected to the drive shaft 11 of the internal combustion engine 8 by means of the transmission device 13. According to a different embodiment which is not shown herein, in each generation assembly 7, the shaft 12 of the electric generator 9 is parallel and coaxial to the drive shaft 11 of the internal combustion engine 8 and is directly fixed to the drive shaft 11 of the internal combustion engine 8 (namely, without the interposition of the transmission device 13).

According to a different embodiment which is not shown herein, each generation assembly 7 comprises two electric generators 9 connected to the two opposite ends of the drive shaft 12 of the respective internal combustion engine 8.

In the embodiment shown in the accompanying figures, the electric generators 9 have a radial flow (hence, they tend to be narrow and long); alternatively, the electric generators 9 have an axial flow (hence, they tend to be wide and short).

The car 1 comprises a control unit CU (schematically shown in figure 1) configured to control the operation of the car 1 and, in particular, configured to control the operation of the drive system 5.

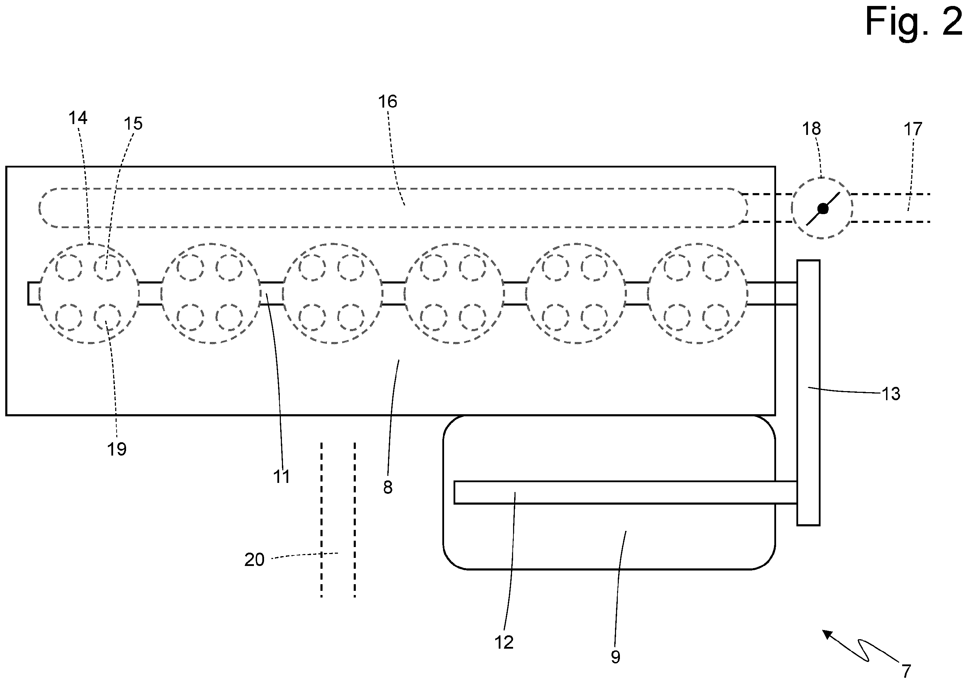

According to figure 2, each internal combustion engine 8 comprises six cylinders 14, which are arranged in line; a respective piston slides in each cylinder 14 with a reciprocating motion and is connected to the drive shaft 11 by means of a connecting rod. According to other embodiments, the number and/or the arrangement of the cylinders 14 could be different (for example, there could be four or five cylinders 14 arranged in line or there could be six cylinders 14 arranged in a "V"-like shape, for example, with a reduced angle between the two banks to limit the transverse dimension). Each cylinder 14 is provided with two intake valves 15, which are connected to an intake manifold 16; in turn, the intake manifold 16 is connected to an intake duct 17 provided with a throttle valve 18 for adjusting the air flow rate along the intake duct 17. Each cylinder 14 is provided with two exhaust valves 19, which are connected to an exhaust duct 20.

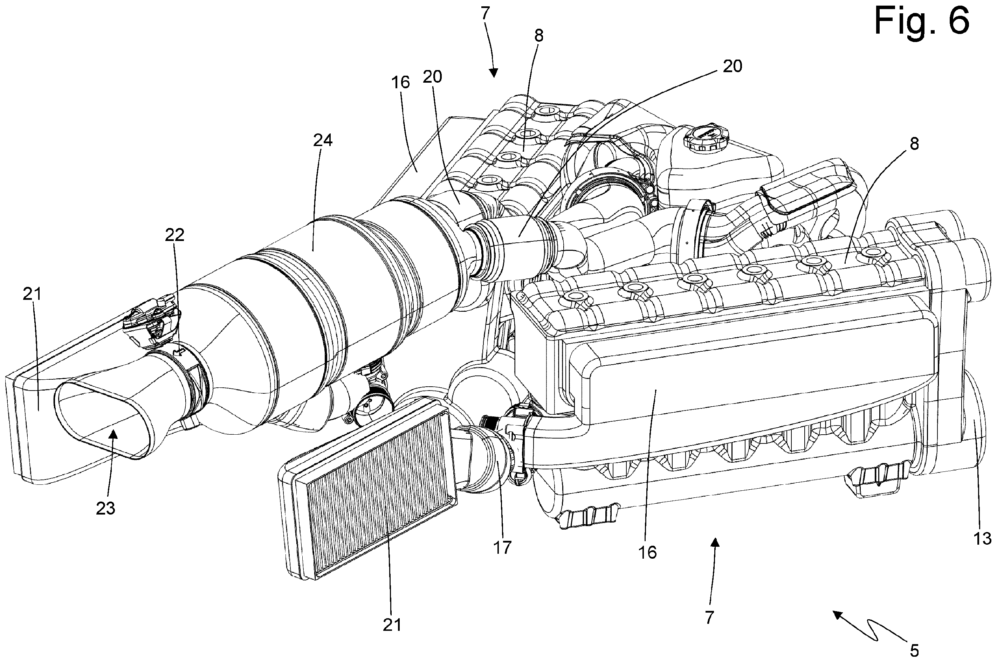

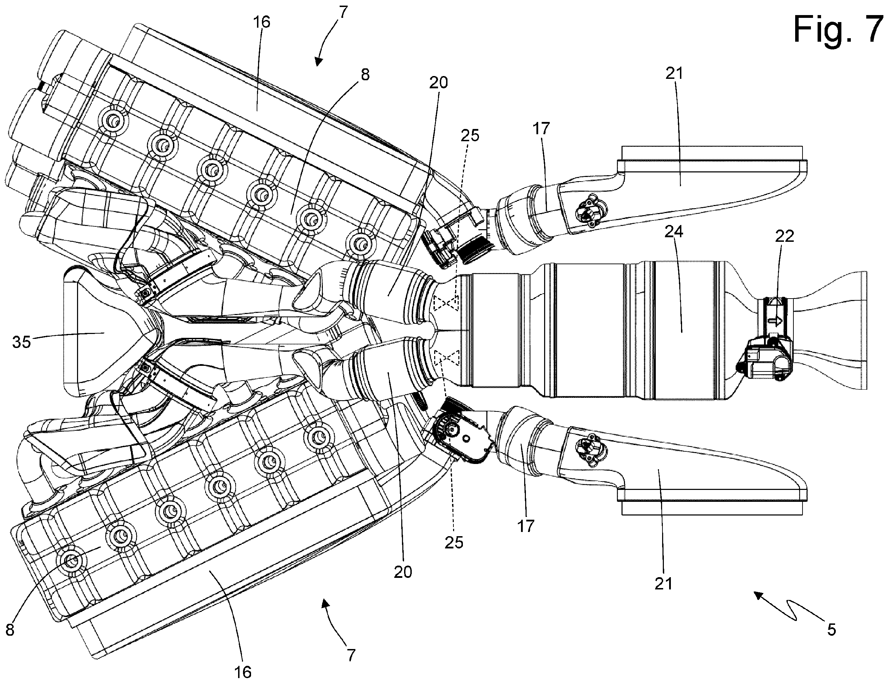

According to figures 3-4 and 6-7, each intake duct 17 originates from a respective air intake 21, which is located in the area of a lateral side of the car 1; namely, each intake duct 17 originates from the air intake 21 obtained through a side of a body of the car 1. An air box containing an air filter is located in the area of each air intake 21; namely, the air intake 21 is directly obtained in an outer wall of the air box.

It should be pointed out that each intake duct 17 is extremely short and has a substantially straight geometry; as a consequence, each intake duct 17 has very small pressure drops. In addition, each intake duct 17 is relatively far from the engine block of the corresponding internal combustion engine 8; as a consequence, each intake duct 17 tends to heat the air taken in to a small extent.

According to figures 3-4 and 6-7, each internal combustion engine 8 is provided an own exhaust duct 20 of its own configured to receive exhaust gases from respective cylinders 14; one single common outlet pipe 22 is provided, which ends with an emission opening 23, through which exhaust gases are released into an external environment (namely, released into the atmosphere), and which receives exhaust gases from both exhaust ducts 20 of the two internal combustion engines 8. Namely, at a certain point the two exhaust ducts 20 of the two internal combustion engines 8 come together, merging together into the single common outlet pipe 22. Preferably, the outlet pipe 22 is located in a central position, namely it is located at the centre of the car 1; consequently, the emission opening 23 opens through a rear tail of the body of the car 1. In other words, each exhaust duct 20 ends (merging into the single common outlet pipe 22) in the area of a rear tail of the car 1.

In the embodiments shown in the accompanying figures, each internal combustion engine 8 (comprising a plurality of cylinders 14 arranged in line) has an intake side, where the intake valves 15 are obtained and which faces a lateral side of the car 1, and an exhaust side, where the exhaust valves 19 are obtained and which faces a centre of the car 1. Consequently, the two intake ducts 17 are arranged externally and originate in the two air intakes 21 obtained in the area of a lateral side of the car 1, whereas the two exhaust ducts 20 (which then merge together into the single common outlet pipe 22) are arranged at the centre and end together in the area of a rear tail of the car 1.

According to a different embodiment which is not shown herein, the layout of the two internal combustion engine 8 is inverted and, therefore, each internal combustion engine 8 (comprising a plurality of cylinders 14 arranged in line) has the intake side, where the intake valves 15 are obtained and which faces a centre of the car 1, and the exhaust side, where the exhaust valves 19 are obtained and which faces a lateral side of the car 1. In this embodiment, the exhaust duct 20 of each internal combustion engine 8 ends in the area of a lateral side of the car 1 and is completely separate from and independent of the exhaust duct 20 of the other internal combustion engine 8 (namely, there is no common outlet pipe 20, into which the two exhaust ducts 20 merge together, as the two exhaust ducts 20 end in two different emission openings opposite one another in the area of the two sides of the car 1). In this embodiment, there could be one single common air intake 21, which supplies both intake ducts 17 and is arranged at the centre of the body of the car 1.

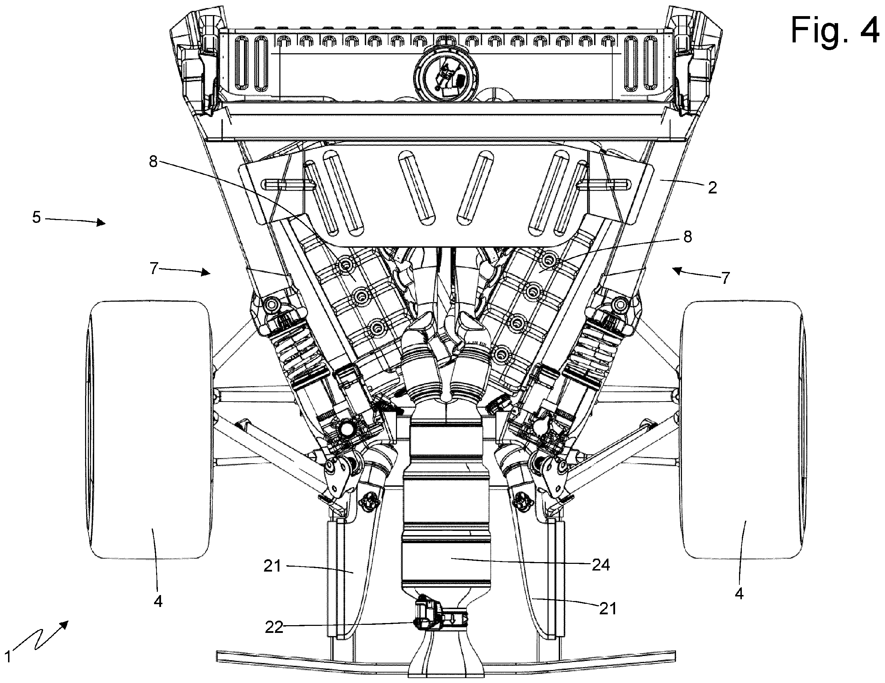

As better shown in figures 3 and 4, one single exhaust gas treatment device 24 is provided, which is located along the common outlet pipe 22 downstream of the two exhaust ducts 20. The treatment device 24 can consist, if necessary, of several components (for example, an oxidation catalytic converter, a reduction catalytic converter or a particulate filter) arranged in series, which can also be physically separate from one another, namely arranged at a given distance from one another. In this configuration, the treatment device 24 is common to both internal combustion engines 8 and, therefore, is always kept warm (hence, fully efficient), even when only one internal combustion engine 8 is turned on.

According to a possible embodiment shown in figure 3, each exhaust duct 20 comprises an electronically controlled sealing valve 25 (schematically shown in figure 3) configured to open or close the exhaust duct 20; namely, each sealing valve 25 is movable between a position of maximum opening and a position of complete closing of the respective exhaust duct 20. The control unit CU is configured to keep the respective sealing valve 25 closed, when an internal combustion engine 8 is turned off, and to keep the respective sealing valve 25 open, when an internal combustion engine 8 is turned on. Indeed, the function of the sealing valve 25 is to close its own exhaust duct 20, when the respective internal combustion engine 8 is turned off, so as to prevent the exhaust gases generated by the other internal combustion engine 8 from flowing towards the cylinders 14 of the turned-off internal combustion engine 8.

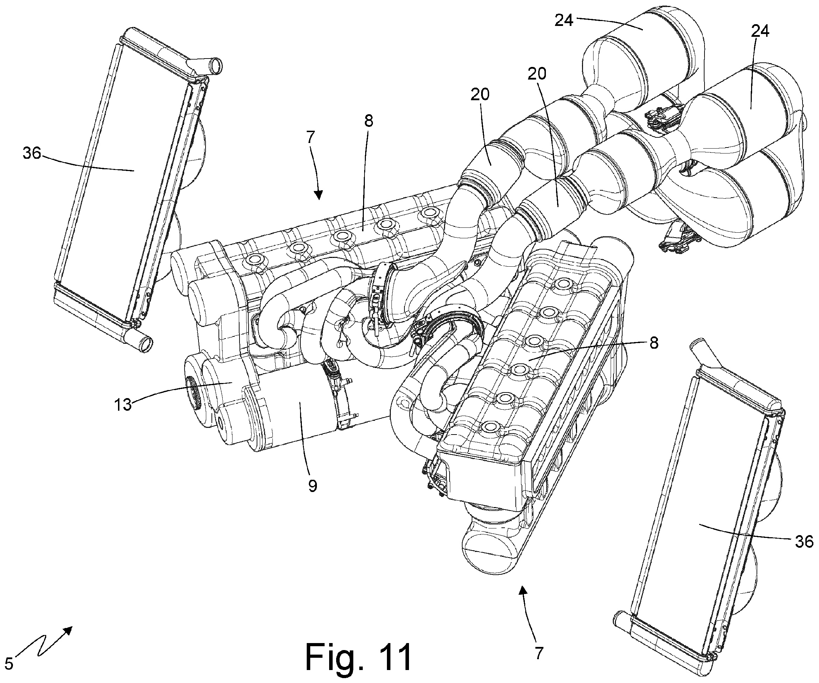

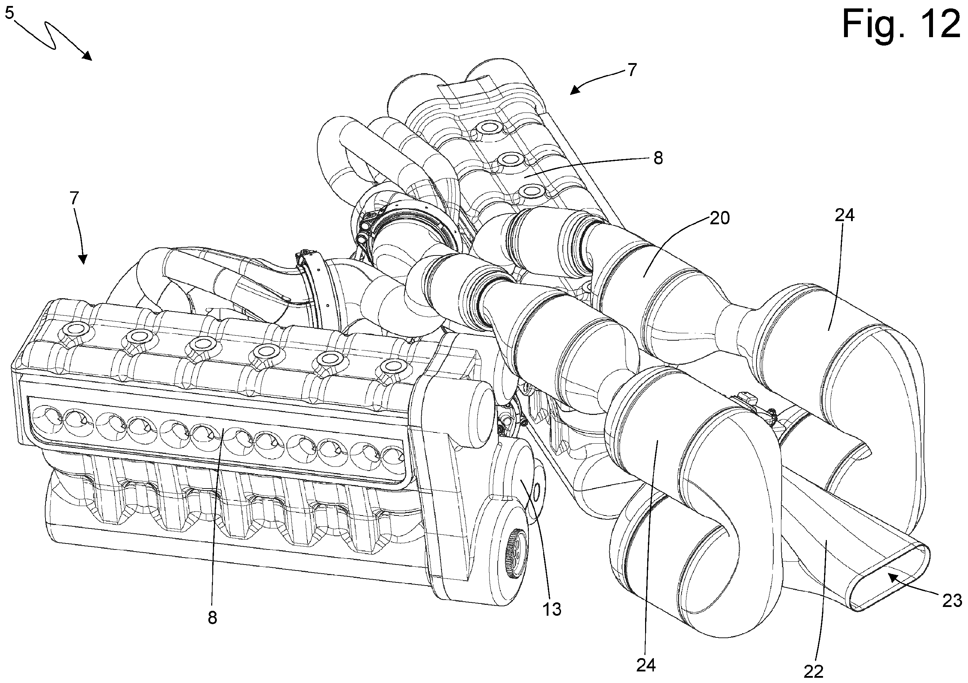

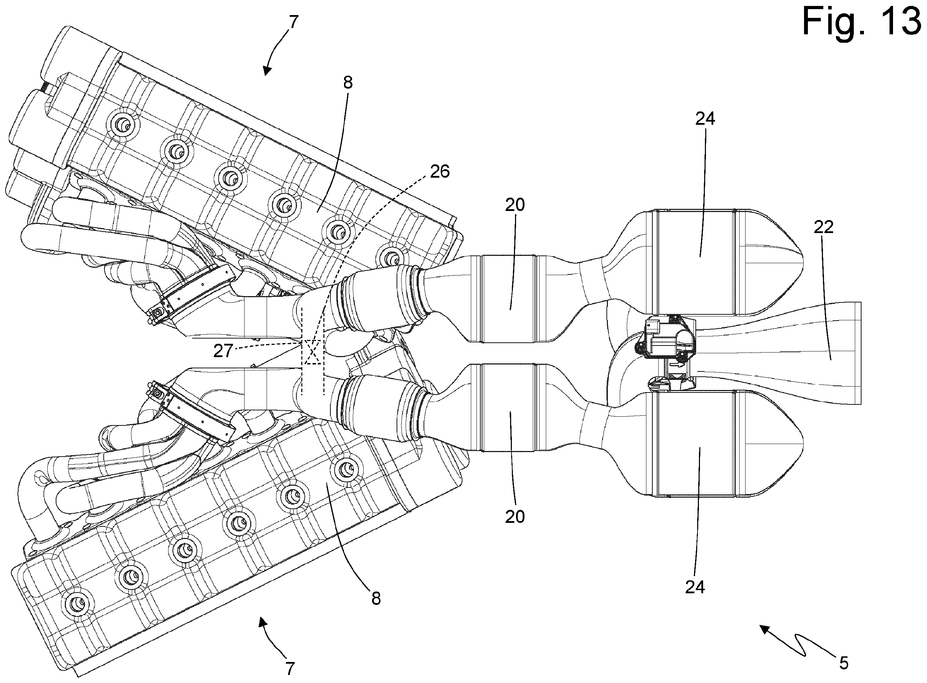

According to an alternative embodiment shown in figures 11, 12 and 13, two exhaust gas treatment devices 24 (if necessary, consisting of several components) are provided, each located along a respective exhaust duct 20 upstream of the common outlet pipe 22. This embodiment preferably entails an interconnection duct 26 (schematically shown in figure 13), which connects the two exhaust ducts 20 to one another, and an electronically controlled interconnection valve 27 (schematically shown in figure 13), which is located along the interconnection duct 26 and is configured to open or close the interconnection duct 26; namely, the interconnection valve 27 is movable between a position of maximum opening and a position of complete closing of the interconnection duct 26. The interconnection duct 26 is fitted into each exhausts duct 20 upstream of the respective exhaust gas treatment device 24.

The control unit CU is configured to keep the interconnection valve 27 closed, when both internal combustion engines 8 are turned on, and to keep the interconnection valve 27 open, when an internal combustion engine 8 is turned on and the other internal combustion engine 8 is turned off; in this way, when the two internal combustion engines 8 are turned on, there are no mutual influences in the respective exhaust ducts 20, whereas, when an internal combustion engine 8 is turned off, the corresponding treatment device 24 is always kept warm (hence, fully efficient) by the exhaust gases of the other internal combustion engine 8.

In the embodiment shown in figures 11, 12 and 13, as well, each exhaust duct 20 comprises the sealing valve 25, which is configured to open or close the exhaust duct 20 and is located upstream of the interconnection duct 26. In this case, again, the control unit CU is configured to keep the respective sealing valve 25 closed, when an internal combustion engine 8 is turned off, and to keep the respective sealing valve 25 open, when an internal combustion engine 8 is turned on. In this way, when an internal combustion engine 8 is turned off, the exhaust gases of the other engine coming from the interconnection duct 26 are prevented from flowing towards the cylinders 14 of the turned-off internal combustion engine 8; in fact, the function of the interconnection duct 26 is to convey part of the exhaust gases from the turned-on internal combustion engine 8 not to the cylinders 14 of the turned-off internal combustion engine 8, but only to the treatment device 24 of the turned-off internal combustion engine 8.

In the embodiments described above, when at least one internal combustion engine 8 is turned on, the treatment device 24 or both treatment devices 24 are kept warm and, therefore, efficient; consequently, it is possible to turn the internal combustion engine 8 off at all times without significantly increasing emissions into the atmosphere.

Preferably, the exhaust gases generated by the turned-on internal combustion engine 8 are used to heat the treatment device 24 of the turned-off internal combustion engine 8 or to keep it warm only starting from when the treatment device 24 of the turned-on internal combustion engine 8 reaches an optimal work temperature (so as not to slow down, or jeopardize, the achievement of the optimal work temperature).

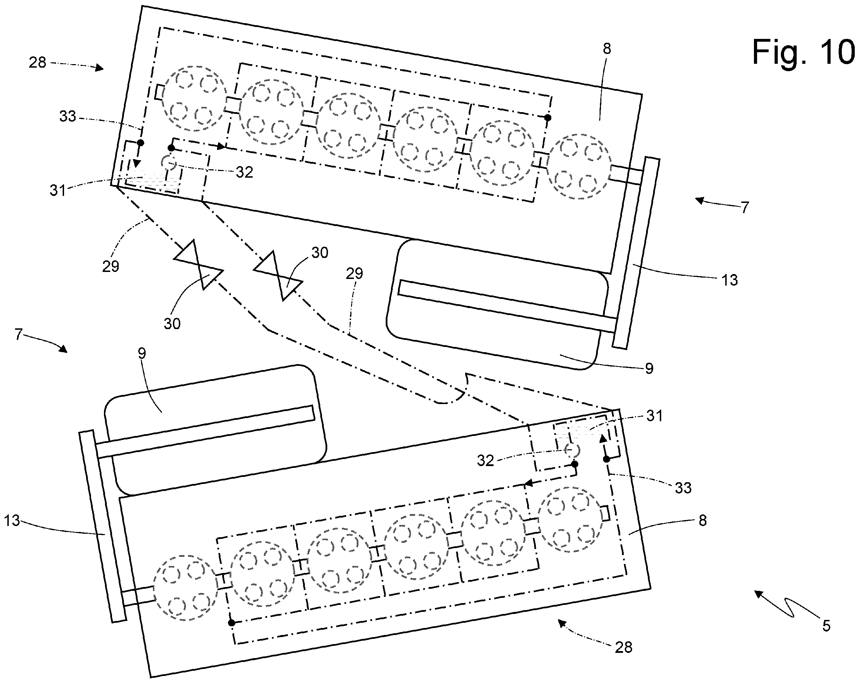

According to figure 10, each internal combustion engine 8 is provided with a lubrication circuit 28 of its own, inside which a lubricating oil flows. Two interconnection ducts 29 are provided, which establish a hydraulic communication between the lubrication circuit 28 of an internal combustion engine 8 and the lubrication circuit 28 of the other internal combustion engine 8, so that part of the lubricating oil flowing in the lubrication circuit 28 of an internal combustion engine 8 can flow to the lubrication circuit 28 of the other internal combustion engine 8 and vice versa.

Preferably, each interconnection duct 26 is provided with an electronically controlled interconnection valve 30, which can be controlled to open or close (or, if necessary, choke) the interconnection duct 26. According to a different embodiment which is not shown herein, only one of the two interconnection ducts 29 is provided with the interconnection valve 30.

In particular, the lubrication circuit 28 of each internal combustion engine 8 comprises a lubrication tank 31 containing the lubricating oil, a lubrication pump 32, which sucks from the lubrication tank 31, and a return duct 33, which collects the lubricating oil and ends in the lubrication tank 31. Preferably, a first interconnection duct 26 connects a delivery of the lubrication pump 32 of the lubrication circuit 28 of an internal combustion engine 8 to a delivery of the lubrication pump 32 of the other internal combustion engine 8; on the other hand, a second interconnection duct 26 connects the return duct 33 of an internal combustion engine 8 to the return duct 33 of the other internal combustion engine 8.

Generally, each lubrication pump 32 is operated by the drive shaft 11 of the respective internal combustion engine 8 by means of a mechanical transmission; alternatively, each lubrication pump 32 could be operated by a dedicated electric motor.

The control unit CU is configured to keep the lubrication circuits 28 isolated from one another, avoiding the exchange of lubricating oil, when both internal combustion engines 8 are turned on, and to establish a communication between the lubrication circuits 28, allowing for the exchange of lubricating oil, when only one of the two internal combustion engines 8 is turned on and the other internal combustion engine 8 is turned off. In this way, when both internal combustion engines 8 are turned on, no mutual interference occurs between the two lubrication circuits 28, whereas, when only one of the two internal combustion engines 8 is turned on, the hot lubricating oil of the turned-on internal combustion engine 8 also circulates in the turned-off internal combustion engine 8, keeping the turned-off internal combustion engine 8 warm; consequently, it is possible to turn the turned-off internal combustion engine 8 on at all times without significantly increasing emissions into the atmosphere and without increasing mechanical wear.

In other words, a hydraulic communication is established between the two lubrication circuits 28 by means of the two interconnection ducts 29, so that, when needed, part of the lubricating oil flowing in a lubrication circuit 28 can flow to the other lubrication circuit 28 and vice versa.

Preferably, the lubricating oil of the turned-on internal combustion engine 8 is used to heat the turned-off internal combustion engine 8 or to keep it warm only starting from when the lubricating oil of the turned-on internal combustion engine 8 reaches an optimal work temperature (so as not to slow down, or jeopardize, the achievement of the optimal work temperature).

As described above, both internal combustion engines 8 are mechanically completely independent of one another (namely, no transmission of motion occurs between the drive shafts 11 of the two internal combustion engines 8) and are mechanically completely independent of the rear drive wheels 4 (namely, no transmission of motion occurs between the drive shafts 11 of the two internal combustion engines 8 and the rear drive wheels 4). The connection between the internal combustion engines 8 and the rear drive wheels 4 takes place *"electrically",* since the electrical energy generated by the two generation assemblies 7 operated by the internal combustion engines 8 is used to power the two electric motors 6 coupled to the rear drive wheels **4.**

According to a preferred embodiment shown in figure 1, the drive shaft 11 of each internal combustion engine 8 forms, with the longitudinal direction L, an acute angle $\alpha$ preferably ranging from 10° to 45° and, in particular, ranging from 20° to 30°. Namely, the drive shaft 11 of each internal combustion engine 8 is arranged neither longitudinally (i.e. parallel to the longitudinal direction L) nor transversely (i.e. perpendicular to the longitudinal direction L), but is inclined (forming an acute angle) relative to the longitudinal direction L. This *"inclined"* (*"oblique"*) arrangement of the internal combustion engines 8 (namely, of the drive shafts 11 of the two internal combustion engines 8) allows the internal combustion engines 8 to match (reproduce, support) the tapered shape of the frame 2 (as well shown in figures 3, 4 and 5), which offers great advantages in aerodynamic terms.

Preferably, the drive shaft 11 of each internal combustion engine 8 forms, with the longitudinal direction L, an acute angle $\alpha$ having the vertex facing an area behind the car 1; namely, a front end of each drive shaft 11 is arranged more towards the outside of the frame 2, whereas the rear end (opposite the front end) of the drive shaft 11 is arranged more towards the centre of the frame 2. Hence, each drive shaft 11 moves from the outside of the frame 2 towards the inside of the frame 2, moving from the front to the rear. In other words, a front end of each drive shaft 11 is arranged more towards the outside of the frame 2 than a rear end of the drive shaft 11, namely the rear end of each drive shaft 11 is arranged more towards the centre of the frame 2 than the front end of the drive shaft 11.

Preferably, the drive shafts 11 of the two internal combustion engines 8 have opposite inclinations relative to the longitudinal direction L, so that the two drive shafts 11 of the two internal combustion engines 8 form, together, a "V" having the vertex facing an area behind the car 1.

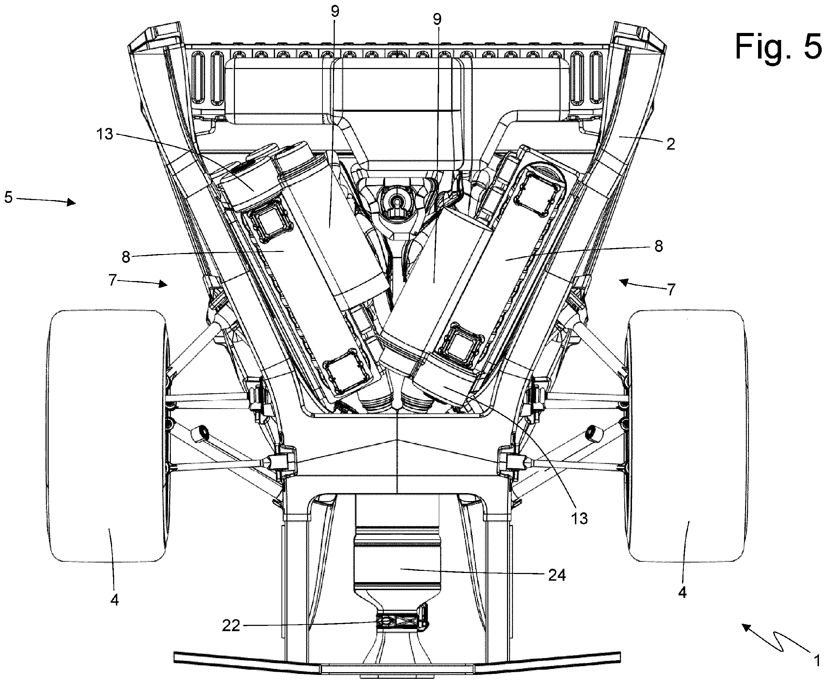

According to a preferred embodiment, the shaft 12 of an electric generator 9 is connected to a rear end of the drive shaft 11 of the corresponding internal combustion engine 8, while the shaft 12 of the other electric generator 9 is connected to a front end of the drive shaft 11 of the corresponding internal combustion engine 8. This *"inverted"* arrangement of the two generation assemblies 7 allows the transverse dimensions to be contained, as well shown in figure 5.

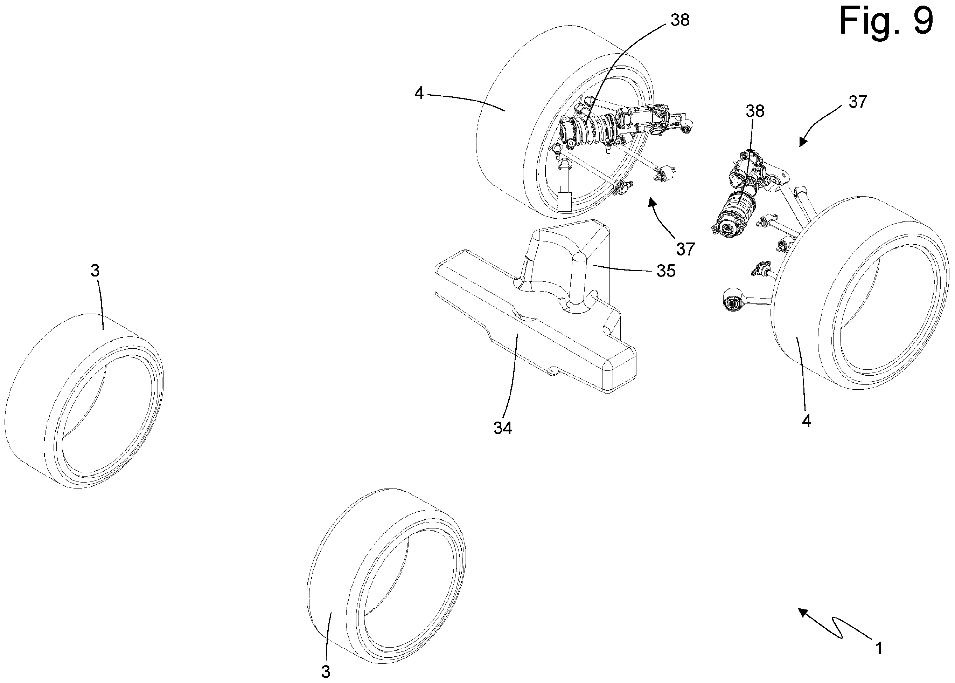

According to a preferred embodiment, which is better shown in figure 9, the car 1 comprises a fuel tank 34, which is shared by both internal combustion engines 8 and is at least partially located within a "V"-shaped space laterally delimited by the two internal combustion engines 8. Similarly, the car 1 comprises a lubricating oil tank 35, which is shared by both internal combustion engines 8 and is at least partially located within a "V"-shaped space laterally delimited by the two internal combustion engines 8.

According to a preferred embodiment shown in figure 1, the drive shaft 11 of each internal combustion engine 8 forms, with a horizontal plane, an acute angle $\beta$. Preferably, each acute angle $\beta$ formed between the drive shaft 11 of an internal combustion engine 8 and the horizontal plane ranges from 5° to 15°. In particular, a rear end of each drive shaft 11 is arranged higher than a front end of the drive shaft 11 so that the internal combustion engine 8 is inclined forward (namely, has the rear part raised with respect to the front part, as shown in figure 1). This forward inclined arrangement of the internal combustion engines 8 allows for the creation of a rear aerodynamic chute (diffuser) (which is partially located below the two internal combustion engines 8) with extremely large dimensions, thus allowing for the generation of a very large aerodynamic force without jeopardizing the drag.

It should be pointed out that the inclination of each internal combustion engine 8 relative to the horizontal simplifies lubrication, since, due to gravity, lubricating oil tends to collect in the front (hence, lower) corner of the internal combustion engine 8.

According to a possible embodiment, the two generation assemblies 7 have the same nominal performances in terms of maximum power and energy efficiency; namely, the two generation assemblies 7 are twins and have two internal combustion engines 8 identical to one another (and arranged differently) and two electric generators 9 identical to one another (and arranged differently). According to an alternative embodiment, the two generation assemblies 7 are different in terms of maximum power and energy efficiency, since a first generation assembly 7 is configured to generate a greater electrical power than a second generation assembly 7 and the second generation assembly 7 is configured to generate electrical energy with a greater energy efficiency than the first generation assembly 7 (at least in the most used operating areas); in this embodiment, the first generation assembly 7 is mainly used when the generation of a high electrical power is required, while the second generation assembly 7 is mainly used for all other situations.

In the event of differentiation between two generation assemblies 7, the two internal combustion engines 8 could be different from one another in terms of total displacement, cylinder configuration (namely, number of cylinders 14), arrangement of the cylinders 14 or thermodynamic cycle used (for example, one of the two internal combustion engines 8 could operate according to the Atkinson cycle).

In general, the control unit CU determines at all times which is the optimal combination (namely, how many and which internal combustion engines 8 to use) to generate the required electrical power with the maximum energy efficiency, avoiding, of course, turning the internal combustion engines 8 on and off too frequently. According to a possible embodiment, the control unit CU is configured to operate one single generation assembly 7, when the electrical power absorbed by the electric motors 6 is smaller than a threshold value, and to operate both generation assemblies 7, when the electrical power absorbed by the electric motors 6 is greater than the threshold value. To this regard, it should be pointed out that any short-lived peaks in the electrical power absorbed by the electric motors 6 are generally not provided by the generation assemblies 7, but are provided by the storage device 10.

According to a preferred embodiment, the drive shaft 11 of each internal combustion engine 8 is not connected to any flywheel and is not connected to any damper. Namely, each internal combustion engine 8 completely lacks a flywheel and a damper. The control unit CU is configured to determine the torsional vibrations of the drive shaft 11 of each internal combustion engine 8 and to control the corresponding electric generator 9 so as to apply to the drive shaft 11 a compensation torque that tends to cancel the torsional vibrations. In other words, in each internal combustion engine 8, the torsional vibrations are not reduced by the inertia of a flywheel (which is not there) and are not damped by the action of a damper (which is not there), but they are cancelled (compensated) by a compensation torque applied by the corresponding electric generator 9. It should be noted that, in any case, the rotor of each electric generator 9 has a non-negligible mass and, therefore, since the shaft 12 of the electric generator 9 is angularly integral to the drive shaft 11 of the internal combustion engine 8, the rotor of each electric generator 9 partially performs the function of a flywheel. As mentioned above, the drive shaft 11 of each internal combustion engine 8 is mechanically connected only to the electric generator 9 and, therefore, is mechanically independent of the rear drive wheels 4.

In each internal combustion engine 8, the torsional vibrations in the drive shaft 11 are caused by alternating accelerations and decelerations in the rotation of the drive shaft 11 due to the cyclical nature of the combustion in the cylinders 14. According to a possible embodiment, the control unit CU analyses the rotation speed $\omega_E$ of the drive shaft 11 determining high-frequency accelerations (namely, at the frequency with which the combustion takes place in the cylinders 14) (which can be positive or negative) and then controls the electric generator 9 so as to generate an additional (positive or negative) torque, which counteracts said high-frequency accelerations; namely, if the drive shaft 11 has a positive acceleration, then the control unit CU controls the electric generator 9 so as to increase the absorbed torque in order to slow down the drive shaft 11 and vice versa.

As mentioned above, the drive shaft 11 of each internal combustion engine 8 could be coupled to two electric generators 9, which are mechanically connected to the two opposite ends of the drive shaft 11; in this embodiment, the control unit CU is configured to determine the torsional vibrations of each drive shaft 11 and to control each electric generator 9 so as to apply to the drive shaft 11 a compensation torque that tends to cancel the torsional vibrations. Therefore, in this embodiment, in each internal combustion engine 8, the two electric generators 9 act as dynamic equalizers on both sides of the drive shaft 11, damping the torsional vibrations.

According to a preferred embodiment, the control unit CU is configured to control the two internal combustion engines 8 (obviously, when they are turned on simultaneously) in a synchronous manner so as to cause the two internal combustion engines 8 to rotate at the same rotation speed $\omega_E$ in order to obtain a regular sound generation, namely, a sound generation in which the combustions (firings) in the cylinders 14 of the two internal combustion engines 8 always take place with the same sequence and at the same intervals; alternatively, the control unit CU is configured to control the two internal combustion engines 8 (obviously, when they are turned on simultaneously) in an asynchronous manner so as to cause the two internal combustion engines 8 to rotate at different rotation speeds $\omega_E$ in order to obtain an irregular sound generation, namely, a sound generation in which the combustions (firings) in the cylinders 14 of the two internal combustion engines 8 take place with a continuously variable sequence and at continuously variable intervals.

According to a possible embodiment, when the control unit CU controls the two internal combustion engines 8 in a synchronous manner so as to cause the two internal combustion engines 8 to rotate at the same rotation speed $\omega_E$, a phase shift is imposed on the two internal combustion engines 8 such that a combustion in one cylinder 14 of an internal combustion engine 8 always takes place between the ignition of the combustions in two cylinders 14 of the other internal combustion engine 8. In other words, when the control unit CU controls the two internal combustion engines 8 in a synchronous manner so as to cause the two internal combustion engines 8 to rotate at the same rotation speed $\omega_E$, a phase shift is imposed on the two internal combustion engines 8 such that the ignition of a combustion in a cylinder 14 of an internal combustion engine 8 never takes place at the same time as the ignition of a combustion in a cylinder 14 of the other internal combustion engine 8.

Alternatively, when the control unit CU controls the two internal combustion engines 8 in a synchronous manner so as to cause the two internal combustion engines 8 to rotate at the same rotation speed $\omega_E$, a phase shift is imposed on the two internal combustion engines 8 such that a combustion in a cylinder 14 of an internal combustion engine 8 always takes place simultaneously with the ignition of a combustion in a cylinder 14 of the other internal combustion engine 8. In other words, when the control unit CU controls the two internal combustion engines 8 in a synchronous manner so as to cause the two internal combustion engines 8 to rotate at the same rotation speed $\omega_E$, a phase shift is imposed on the two internal combustion engines 8 such that the ignition of a combustion in a cylinder 14 of an internal combustion engine 8 always takes place at the same time as the ignition of a combustion in a cylinder 14 of the other internal combustion engine 8.

According to a possible embodiment, when the control unit CU controls the two internal combustion engines 8 in an asynchronous manner so as to cause the two internal combustion engines 8 to rotate at different rotation speeds $\omega_E$, a constant and predetermined angular speed difference is set. In this embodiment, the angular speed difference is smaller than 30 rpm and is preferably smaller than 15 rpm. Furthermore, the angular speed difference is greater than 2 rpm and is preferably greater than 5 rpm. In this way, the variation in the sound generation determined by the continuous change in the sequence with which the combustions (firings) take place in the cylinders 14 of the two combustion engines 8 is neither too fast nor too slow and, therefore, can clearly be perceived by the passengers of the car 1.

It should be noted that the two internal combustion engines 8 can be different and, in particular, can be differentiated in terms of intake and exhaust; consequently, even at the same rotation speed, the two internal combustion engines 8 have different sounds. In this way, the various possibilities available to the control unit CU (one or the other of two internal combustion engines 8 can be turned on or both internal combustion engines 8 can be turned on with identical or different rotation speeds $\omega_E$...) allow many different sounds to be produced in order to differentiate different driving situations from an acoustic point of view.

According to a preferred embodiment, the control unit CU is configured to perform regenerative braking by having the electric motors 6 operate as a generator, which absorbs kinetic energy and generates electrical energy; during regenerative braking, the electrical energy generated by the electric motors 6 operating as a generator is stored with priority in the electrical energy storage device 10. However, during particularly intense braking, the electrical energy storage device 10 may not be able to store all the electrical energy generated by the electric motors 6 operating as a generator and, in this case, the control unit CU is configured to cancel the generation of torque by the internal combustion engines 8 and to have the electric generators 9 operate as a motor, using at least part of the electrical energy generated by the electric motors 6 operating as a generator, in order to cause the motor shafts 11 of the internal combustion engines 8 to rotate. In other words, the excess electrical energy (namely, the electrical energy that cannot be absorbed by the electrical energy storage device 10) is dissipated by causing the drive shafts 11 of the internal combustion engines 8 to rotate.

In the situation where the internal combustion engines 8 are used as energy dissipators, the control unit CU controls each internal combustion engine 8 so as to maximize the torque needed to cause the rotation of the drive shaft 11.

In order to maximize the power needed to cause the rotation of the drive shaft 11 of each internal combustion engine 8, the internal combustion engine 8 is controlled so as to maximize a flow rate of air sucked into the cylinders 14 by placing the throttle valve 18 in a maximum opening position.

In order to maximize the power needed to cause the rotation of the drive shaft 11 of each internal combustion engine 8, the internal combustion engine 8 is controlled so as to maximize an air pressure inside the cylinders 14 at the end of a compression stroke by anticipating, for each cylinder 14, an opening of the intake valves 15 and by delaying an opening of the exhaust valves 19 in order to avoid an overlap of the valves, namely in order to avoid an amount of time in which the intake valves 15 and the exhaust valves 19 are opened simultaneously.

In order to maximize the power needed to cause the rotation of the drive shaft 11 of each internal combustion engine 8, the rotation speed $\omega_E$ of the drive shaft 11 is increased to a maximum value.

In the situation where the internal combustion engines 8 are used as energy dissipators, the control unit CU operates each electric generator 9 as a motor in a minimum energy efficiency work point.

In other words, during regenerative braking (namely, during braking that uses the electric motors 6 as generators), the storage device 10 may find itself, for various reasons (batteries with insufficient charging power, batteries that are already fully charged, batteries that are close to full charge and, therefore, are not able to charge at full power...), in the conditions of not being able to absorb all the power generated by the electric motors 6 connected to the rear drive wheels 4; in this condition, the generation assemblies 7 can be used as mechanical power dissipators. The best configuration is found by considering not only the internal combustion engines 8, but also the electric drive (the electric generators 9 and the corresponding electronic power converters), bringing the entire generation assembly 7 to the points of maximum dissipation. When the regenerative braking achieved through the electric motors 6 is always guaranteed, the dimensions (hence, weights and size) of the mechanical braking system can be reduced.

According to a preferred embodiment, the control unit CU does not operate the internal combustion engines 8 (therefore, the electric generators 9) at a constant rotation speed $\omega_E$, but operates the internal combustion engines 8 (therefore, the electric generators 9) at a continuously variable rotation speed $\omega_E$ to simulate the behaviour of a traditional internal combustion engine mechanically connected to the drive wheels.

In particular, the control unit CU determines a rotation speed $\omega_W$ of the rear drive wheels 4 and then varies the rotation speed $\omega_E$ of each internal combustion engine 8 based on the rotation speed $\omega_W$ of the rear drive wheels 4. Preferably, the rotation speed $\omega_E$ of each internal combustion engine 8 is directly proportional to the rotation speed $\omega_W$ of the rear drive wheels 4.

According to a preferred embodiment, a group of virtual gears is previously established, said virtual gears having respective differentiated and scaled gear ratios; in use, the control unit CU determines a virtual engaged gear and then varies the rotation speed $\omega_E$ of each internal combustion engine 8 also based on the virtual engaged gear (in particular, the rotation speed $\omega_E$ of each internal combustion engine 8 is directly proportional to the gear ratio of the virtual engaged gear).

To sum up, the rotation speed $\omega_E$ of each internal combustion engine 8 is determined by the following equation:

$$\omega_E = \omega_W \ \text{x} \ K \ \text{x} \ TR$$

$\omega_E$    is the rotation speed of each internal combustion engine 8;

$\omega_W$    is the rotation speed $\omega_W$ of the rear drive wheels 4;

$K$    is a dimensionless constant;

$TR$    is the gear ratio of the virtual engaged gear.

The control unit CU determines the virtual engaged gear based on upshift and downshift commands given by a driver of the car 1 or the control unit CU determines it by simulating the behaviour of an automatic transmission to maximize an energy efficiency of each internal combustion engine 8.

According to a possible embodiment, a first group of virtual gears is established, which is used when the choice of the virtual engaged gear is made by the driver of the car 1, and a second group of virtual gears is established, which is different from the first group of virtual gears and is used when the choice of the virtual engaged gear is made by simulating the behaviour of an automatic transmission. Generally, the first group of virtual gears comprises a smaller number of virtual gears (e.g. 4-6 virtual gears), while the second group of virtual gears comprises a larger number of virtual gears (e.g. 6-10 virtual gears).

According to a preferred embodiment, the control unit CU is configured to vary the torque generated (during acceleration) or absorbed (during deceleration) by the electric motors 6 based on the virtual engaged gear, so that, by reducing the rank of the virtual engaged gear, the driving torque (during acceleration) or the resistant torque (under deceleration) increases and vice versa.

When the rotation speed $\omega_W$ of the rear drive wheels 4 decreases and when the rank of the virtual engaged gear is increased, it is necessary to slow down the internal combustion engines 8; according to a preferred embodiment, this slowdown of the internal combustion engines 8 can be carried out by using the electric generators 9 (namely, by temporarily increasing the electrical power generated by the electric generators 9), since a (temporary) increase in the generated electrical power can be absorbed by the storage device 10. In this way, the slowdown of the combustion engines 8 following the decrease in the rotation speed $\omega_W$ of the rear drive wheels 4 or following an increase in the rank of the virtual gear engaged can be rapid (or, more generally, it can follow a desired time profile) and at the same time energy efficient.

According to a possible embodiment, the rotation speed $\omega_W$ of the rear drive wheels 4 is determined based on a travelling speed of the car 1 (hence, without taking into account possible slips of the rear drive wheels 4). Alternatively, the rotation speed $\omega_W$ of the rear drive wheels 4 is determined by calculating an average between the rotation speeds $\omega_W$ of both the rear drive wheels 4 (hence, taking into account possible slips of the rear drive wheels 4).

According to figure 11, the drive system 5 comprises two radiators 36, which are located in the area of opposite sides and are used to cool the two internal combustion engines 8. Generally, the two internal combustion engines 8 have respective cooling circuits, which are separate from and independent of one another, and, therefore, the cooling circuit of each internal combustion engine 8 is connected to one single radiator 36 dedicated to the internal combustion engine 8. Other radiators (separate from and independent of the two radiators 36 of the internal combustion engines 8) are provided for cooling the electric motors 6, the electric generators 9, the electronic power converters and the storage device 10.

According to figure 9, each rear drive wheel 4 is fixed to the frame 2 by means of a rear suspension 37 provided with a shock absorber 38, which is arranged horizontally.

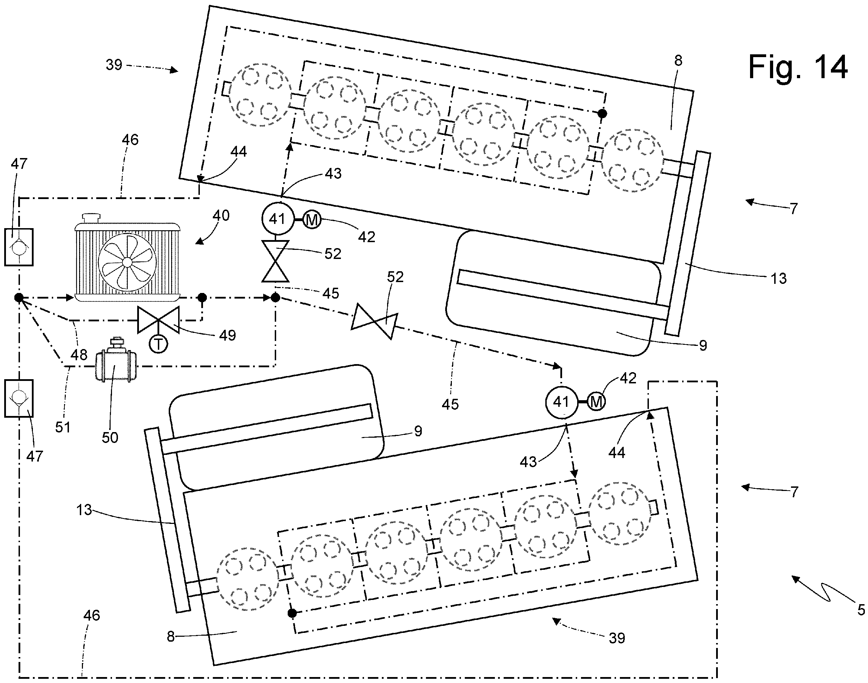

According to figure 14, each internal combustion engine 8 is provided with a cooling circuit 39 of its own, inside which a cooling fluid (generally, water with anti-freezing additives) flows. A hydraulic connection is established between the two cooling circuits 39, so that at least part of the cooling fluid flowing in a cooling circuit 39 can flow to the other cooling circuit 39 and vice versa.

In particular, a radiator assembly 40 is provided, which is common to both cooling circuits 39 and in which the cooling fluids coming from the two cooling circuits 39 can be mixed with one another. The radiator assembly 40 can comprise a pair of radiators 36 connected to one another in parallel (as shown in figure 11) or one single radiator 36 (larger in size); the number of radiators 36 that make up the radiator assembly 40 mainly depends on the shape of the body of the car 1, namely on where and how the body of the car 1 allows the radiators 36 to be arranged. In other words, the cooling fluids flowing in the cooling circuits 39 of the two internal combustion engines 8 mix (merge) together so as to flow through the same radiator assembly 40, which is common to both cooling circuits 39.

Each cooling circuit 39 comprises a cooling pump 41, which is preferably operated by an electric motor 42 of its own so that the cooling pump 41 can be started even when the respective internal combustion engine 8 is turned off and so that the cooling pump 41 can be (if necessary) placed relatively far from the respective internal combustion engine 8; alternatively, each cooling pump 41 is operated by the drive shaft 11 of the internal combustion engine 8 through an appropriate mechanical transmission.

Each cooling circuit 39 develops inside an engine block of the respective internal combustion engine 8 and has an inlet opening 43, in which the cooling fluid coming from the radiator assembly 40 enters the cooling circuit 39, and an outlet opening 44, from which the cooling fluid leaves the cooling circuit 39 in order to flow towards the radiator assembly 40. For each cooling circuit 39, a delivery duct 45 is provided, which connects an outlet of the radiator assembly 40 to the inlet opening 43 of the cooling circuit 39, and a return duct 46 is provided, which connects the outlet opening 44 of the cooling circuit 39 to an inlet of the radiator assembly 40. The two delivery ducts 45 have a common initial segment (namely, there is one single pipe with a double diameter, which constitutes both delivery ducts 45), which bifurcates (namely, starting from the bifurcation, the single double-diameter pipe divides into two single-diameter pipe, each constituting a delivery duct 45); in other words, from the radiator assembly 40, the two delivery ducts 45 are joined together and bifurcate downstream of the radiator assembly 40, so as to be divided from the one another. Similarly, the two return ducts 46 have a common final segment (namely, there is one single pipe with a double diameter, which constitutes both return ducts 46), which originates from a confluence (namely, before the confluence there are two single-diameter pipes, each constituting a return duct 46); in other words, upstream of the radiator assembly 40, the two return ducts 46 join one another to enter the radiator assembly 40 together.

According to a preferred embodiment, each return duct 46 is provided with a non-return valve 47, which allows the cooling fluid to only flow towards the radiator assembly 40 and is located upstream of the confluence where the two return ducts 46 join one another to enter the radiator assembly 40 together.

According to a preferred embodiment, parallel to the radiator assembly 40 (namely, between the inlet and the outlet of the radiator assembly 40) there is a bypass duct 48, which is provided with a bypass valve 49 controlled based on the temperature of the cooling fluid: the bypass duct 48 is opened when the temperature of the bypass duct 48 is lower than a minimum work temperature (and, therefore, must not be cooled) and the bypass duct 48 is closed when the temperature of the bypass duct 48 is higher than a minimum work temperature (and, therefore, must be cooled).

A common expansion tank 50 (namely, one for both cooling circuits 39) is provided, which is connected in parallel to the radiator assembly 40 by means of an expansion duct 51.

According to a possible embodiment, along each delivery duct 45 there is a delivery valve 52, which is electrically controlled and allows the delivery duct 45 to be opened or closed: the delivery valve 52 is opened when the cooling fluid has to flow through the respective cooling circuit 39 (namely, through the engine block of the respective internal combustion engine 8) and the delivery valve 52 is closed when the cooling fluid does not have to flow through the respective cooling circuit 39 (namely, through the engine block of the respective internal combustion engine 8). Generally, the delivery valves 52 are present when the cooling pumps 41 are centrifugal (and, therefore, do not block the passage of the cooling fluid when they are not working), whereas the delivery valves 52 are not present when the cooling pumps 41 are volumetric (and, therefore, block the passage of the cooling fluid when they are not working, thus also performing the function of the delivery valves 52).

When both internal combustion engines 8 are turned on, the cooling fluids of the two cooling circuits 39 continuously mix at the inlet of the radiator assembly 40 (namely, at the confluence of the two return ducts 45) and continuously separate at the outlet of the radiator assembly 40 (namely, at the bifurcation of the two delivery ducts 44). In this way, the work temperatures of the two combustion engines 8 always remain very similar (if not substantially the same), compensating for any asymmetries between the arrangements or conformations of the two internal combustion engines 8.

When both only one of the two internal combustion engines 8 is turned on and the other internal combustion engine 8 is turned off, the cooling fluid of the turned-on internal combustion engine 8 also circulates in the turned-off internal combustion engine 8, keeping the turned-off internal combustion engine 8 warm; consequently, it is possible to turn the turned-off internal combustion engine 8 on at all times without significantly increasing emissions into the atmosphere and without increasing mechanical wear.

In other words, a hydraulic connection is established between the two cooling circuits 39, so that, when needed, at least part of the cooling fluid flowing in a cooling circuit 39 can flow to the other cooling circuit 39 and vice versa.

Preferably, the cooling fluid of the turned-on internal combustion engine 8 is used to heat the turned-off internal combustion engine 8 or to keep it warm only starting from when the cooling fluid of the turned-on internal combustion engine 8 reaches an optimal work temperature (so as not to slow down, or jeopardize, the achievement of the optimal work temperature).

In particular, in order to allow the cooling fluid of the turned-on internal combustion engine 8 to also flow through the turned-off internal combustion engine 8, the control unit CU keeps both delivery valves 52 (if present) open and operates both cooling pumps 41; on the other hand, in order to prevent the cooling fluid of the turned-on internal combustion engine 8 from also flowing through the turned-off internal combustion engine 8, the control unit CU keeps the delivery valve 52 (if present) of the turned-off internal combustion engine 8 closed and only operates the cooling pumps 41 of the turned-on internal combustion engine 8.

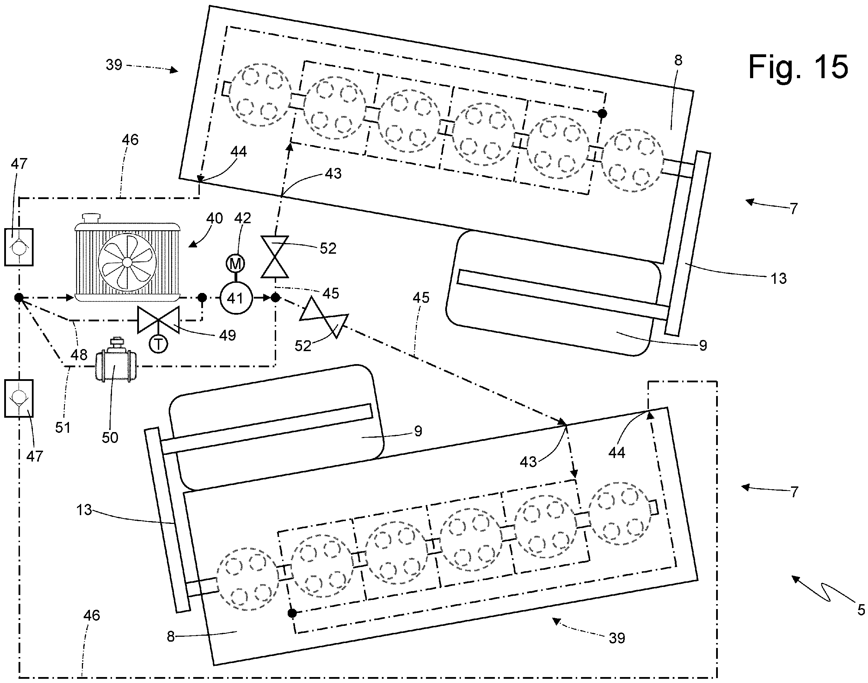

In the embodiment shown in figure 14, there are two cooling pumps 41, each associated with a respective cooling circuit 39; in the alternative embodiment shown in figure 15, there is only one common cooling pump 41, which is unique for both cooling circuits 39. In the embodiment shown in figure 14, the circulation pumps 41 are located along the respective delivery ducts 45 downstream of the bifurcation dividing the delivery ducts 45, whereas, in the embodiment shown in figure 15, the circulation pump 41 is located along both delivery ducts 45 upstream of the bifurcation dividing the delivery ducts 45 (namely, in the area where the delivery ducts 45 are still connected).

As shown in figures 10, 14 and 15, it is possible to have a connection (shown in figure 10) between the lubrication circuits 28 so as to use the lubricating oil of the turned-on internal combustion engine 8 to heat the turned-off internal combustion engine 8 or to keep it warm and it is possible to have a connection (shown in figures 14 and 15) between the cooling circuits 39 so as to use the cooling fluid of the turned-on internal combustion engine 8 to heat the turned-off internal combustion engine 8 or to keep it warm. The connection between the lubrication circuits 28 (shown in figure 10) can be present in combination with or as an alternative to the connection between the cooling circuits 39 (shown in figures 14 and 15).

According to a different embodiment which is not shown herein, each cooling circuit 39 has a dedicated radiator assembly 40 of its own, which is separate from and independent of the radiator assembly 40 of the other cooling circuit 39; in this embodiment, two interconnection ducts (completely similar to the interconnection ducts 29 described above) are provided, which establish a hydraulic communication between the cooling circuit 39 of an internal combustion engine 8 and the cooling circuit 39 of the other internal combustion engine 8, so that at least part of the cooling fluid flowing in the cooling circuit 39 of an internal combustion engine 8 can flow to the cooling circuit 39 of the other internal combustion engine 8 and vice versa.

In the embodiments shown in the accompanying figures, two generation assemblies 7 are provided, which are completely independent of one another; according to other embodiments which are not shown herein, a different number of generation assemblies 7 is provided: for example, one single generation assembly 7 or three or four generation assemblies 7.

The embodiments described herein can be combined with one another.

The car described above has numerous advantages.

First of all, the car described above allows the dimensions inside the car 1 to be contained, thus allowing for the creation of a particularly *"slim"* car 1 to the full benefit of aerodynamic efficiency. Among other things, it does not have any type of mechanical transmission (hence, there is no transmission shaft, since the transmission of power from the internal combustion engines 8 to the rear drive wheels 4 takes place electrically). This result is also due to the fact that, instead of one single large-sized internal combustion engine 8, two small-sized internal combustion engines 8 are used, which, for they are completely independent of one another, can be installed in different and relatively distant positions. This result is also achieved thanks to the fact that the internal combustion engines 8 can be mounted *"inclined"* (*"oblique"*), thus allowing the internal combustion engines 8 to match (reproduce, support) the tapered shape of the frame 2 (as well shown in figures 3, 4 and 5), which offers great advantages in aerodynamic terms.

Besides, the absence of the transmission tunnel also has structural advantages because it makes the frame 2 continuous over the entire width, thus increasing effectiveness in terms of sizing for lateral impact and pole impact.

In other words, in traditional powertrain architectures, only one internal combustion engine is used and the need to use a gearbox to adapt torque and revolutions to the needs of road driving makes the presence of more than one internal combustion engine inefficient. On the contrary, in the car 1 described above, in order to improve the architecture of a high-performance series hybrid vehicle, the electric generation is divided into at least two generation assemblies 7 and, therefore, each generation assembly 7 is smaller and can be installed in the car with greater freedom, since it does not need mechanical constraints to couple it to the other generation assembly 7. The coupling of the power generated by the two generation assemblies 7 takes place by means of high-voltage electrical cables, which have the advantage of having even complex spatial geometries without any increase in cost. In this way, instead of multiplying the cylinder banks 14, there can be several internal combustion engines 8 completely independent of one another. For example, the two internal combustion engines 8 can be arranged in a V-like shape in plan view, leaving the space dedicated to the fuel tank 34 free at the centre. In addition, multiple independent internal combustion engines 8 make it possible, when only a limited electrical power generation is required, to use only one internal combustion engine 8 at a time, with clear advantages in terms of energy efficiency; namely, this strategy reduces consumption under partial load conditions by operating both the turned-on internal combustion engine 8 and the corresponding electric generator 9 at work points with higher efficiency.

In the car 1 described above, the electric generation of a series hybrid setup is divided into two generation assemblies 7 and the two internal combustion engines 8 of the two generation assemblies 7 can have different intake and exhaust geometries. In this way, the two generation assemblies 7 can be specialized to have different torque/power and efficiency curves, both by differentiating the two internal combustion engines 8 and by differentiating the two electric generators 9. In high-performance cars provided with an internal combustion engine capable of generating the high power needed to achieve the high performance required when driving on a track, a relevant problem to be addressed is that of making the car efficient even when it moves at low speed on roads open to the public, since in these conditions the internal combustion engine is largely oversized and therefore energetically inefficient. In the car 1 described above, there are two internal combustion engines 8 and, therefore, it is possible to use only one internal combustion engine 8 and, in particular, use the internal combustion engine 8 designed to have a higher energy efficiency.

In other words, in high-performance cars, the total installed power is much higher than that required in common road use and internal combustion engines capable of generating high power are increasingly becoming unsuitable for running at low speeds. For naturally aspirated engines, for example, if the maximum revolutions are increased to reduce the weight and the size of the powertrain, the torque at low speeds necessary for good drivability is lost and resorting to the gearbox to compensate for this drawback entails increasing the number of gears, with a consequent increase in weight. For turbocharged engines, in order to reduce the weight and size of the powertrain, again, the size of the turbocharger unit is increased, which, however, is not suitable for low engine speeds, with the same negative result as in the naturally aspirated engine. The limitation to the possible reduction in weight and size of the powertrain is therefore due to the need to also obtain the driveability of the car at low speeds, which would correspond to insufficient torque. The car 1 described above overcomes this limit, since the mechanical constraint between the internal combustion internal combustion engines 8 and the rear drive wheels 4 is eliminated. It is therefore possible to simulate the presence of a gearbox with a larger number of virtual gears than a physical gearbox, while keeping the internal combustion engines 8 operating at higher speeds and with higher power output. The strategy can be used both with and without the aid of the power that can be delivered by the storage device 10, making the motor powertrain system 6 suitable under any state-of-charge condition of the storage device 10.

In addition, the absence of clutches allows the maximum rotation speed of the motor shafts 11 of the internal combustion engines 8 to be increased up to a rotation speed $\omega_E$ of the order of 15,000-18,000 rpm (the electric generators 9 can reach rotation speeds of the order of: 25,000-28,000 rpm); in this way, it is possible to create very compact internal combustion engines 8 that, at the same time, develop a high maximum power.

The car 1 described above offers a high level of driving pleasure, since both in its dynamic behaviour and in its sound characteristics it replicates those of a conventional internal combustion engine vehicle. This result is obtained thanks to the fact that the rotation speed $\omega_E$ of the internal combustion engines 8 is not always constant but is continuously variable in a manner consistent with the state of motion of the car 1. This result is also achieved thanks to the fact that the sound produced by the internal combustion engines 8 is particularly pleasant and consistent with the state of motion of the car 1;

furthermore, the sound produced by the internal combustion engines 8 can be varied, as described above, to obtain particular sound effects that emphasize corresponding driving situations to the benefit of the driver's involvement and satisfaction.

In other words, almost all cars known to date have one single internal combustion heat engine, in which the sequence of combustions (firings) in the cylinders is mathematically constrained by the geometry of the drive shaft and, therefore, it is not possible to impart a variable tone to the engine; namely, once the number of cylinders, their spatial arrangement and the geometry of the drive shaft have been chosen, the sequence of combustion (firings) is fixed throughout the life of the internal combustion engine. On the other hand, in the car 1 described above there are two mechanically independent internal combustion engines 8: by turning on and off the individual internal combustion engine 8 and/or by varying the rotation speed $\omega_E$ and the timing between the two internal combustion engines 8, it is possible to obtain variable tones; namely, it is possible to continuously vary the overall sound at will, since the rotation speeds $\omega_E$ of the individual internal combustion engines 8 are independent of one another and of the motion needs of the car 1, since the internal combustion engines 8 are not mechanically connected to the rear drive wheels 4 and since the electrical energy storage device 10 can be used to provide electrical power, when the generation units 7 generate insufficient electric power, or to absorb electrical power, when the generation units 7 generate excess electrical power. In this way, it is possible to switch from a continuous sequence of combustions (firings), as is commonly the case, to a so-called *"big bang"* sound, in which the internal combustion engines 8 have overlapping combustions (firings). Therefore, the car 1 described above can have very different sounds for different uses of the car 1.

In each internal combustion engine 8, the absence of the flywheel and the damper (whose functions are replaced by the respective electric generator 8) make it possible to reduce the overall weight and dimensions; in particular, the absence of the flywheel makes it possible to reduce the vertical dimension of the internal combustion engine 8, which can then be mounted lower, significantly contributing to the lowering of the centre of gravity of the car 1.

It should be pointed out that, thanks to the particular compactness and flexibility of arrangement of the generation assemblies 7, the same frame 2 (hence, substantially, the same body that covers the frame 2) can be used both to manufacture the car 1 described above with a series hybrid setup and to manufacture a car (completely identical to the car 1 described above, on the outside) with a purely electric setup.

Finally, the car 1 described above has a relatively low production cost thanks to the extreme rationality and simplicity of the arrangement of the various components.

LIST OF THE REFERENCE NUMBERS OF THE FIGURES

| | |
|---|---|
| 1 | car |
| 2 | frame |
| 3 | front wheels |
| 4 | rear wheels |
| 5 | drive system |
| 6 | electric motor |
| 7 | generation assembly |
| 8 | internal combustion engine |
| 9 | electric generator |
| 10 | storage device |
| 11 | drive shaft |
| 12 | shaft |
| 13 | transmission device |
| 14 | cylinders |
| 15 | intake valve |
| 16 | intake manifold |
| 17 | intake duct |
| 18 | throttle valve |
| 19 | exhaust valves |
| 20 | exhaust duct |
| 21 | air intake |
| 22 | common outlet pipe |
| 23 | emission opening |
| 24 | treatment device |
| 25 | sealing valve |
| 26 | interconnection duct |
| 27 | interconnection valve |
| 28 | lubrication circuit |
| 29 | interconnection ducts |
| 30 | interconnection valve |
| 31 | lubrication tank |
| 32 | lubrication pump |
| 33 | return duct |
| 34 | fuel tank |
| 35 | oil tank |
| 36 | radiators |
| 37 | rear suspension |
| 38 | shock absorber |
| 39 | cooling circuit |
| 40 | radiator assembly |
| 41 | cooling pump |
| 42 | electric motor |
| 43 | inlet opening |
| 44 | outlet opening |
| 45 | delivery duct |
| 46 | return duct |
| 47 | non-return valve |
| 48 | bypass duct |
| 49 | bypass valve |
| 50 | expansion tank |
| 51 | expansion duct |
| 52 | delivery valves |
| CU | control unit |

L    longitudinal direction

**Claims**

1. A method to control a car (1) comprising:

   a frame (2), which develops along a longitudinal direction (L) having a front-rear orientation;
   at least two drive wheels (4);
   at least one electric motor (6) connected to the two drive wheels (4);
   a first generation assembly (7) comprising a first electric generator (9) and a first internal combustion engine (8) provided with a first drive shaft (11), which is mechanically connected only to the first electric generator (9) and, therefore, is mechanically independent of the drive wheels (4); and
   a second generation assembly (7) comprising a second electric generator (9), which is mechanically independent of the first electric generator (9), and a second internal combustion engine (8) provided with a second drive shaft (11), which is mechanically connected only to the second electric generator (9) and, therefore, is mechanically independent of the drive wheels (4);
   wherein the two internal combustion engines (8) have the same number of cylinders (14);
   the control method is **characterized in that** it comprises the steps of controlling, at least for part of an overall operating time, the two internal combustion engines (8) in an asynchronous manner so as to cause the two internal combustion engines (8) to rotate at different rotation speeds ($\omega_E$) in order to obtain an irregular sound generation.

2. The control method according to claim 1, wherein, when the two internal combustion engines (8) are controlled in an asynchronous manner so as to cause the two internal combustion engines (8) to rotate at different rotation speeds ($\omega_E$), a constant and predetermined angular speed difference is set.

3. The control method according to claim 2, wherein the angular speed difference is smaller than 30 rpm.

4. The control method according to claim 3, wherein the angular speed difference is smaller than 15 rpm.

5. The control method according to claim 2, 3 or 4, wherein the angular speed difference is greater than 2 rpm.

6. The control method according to claim 5, wherein the angular speed difference is greater than 5 rpm.

7. The control method according to one of the claims from 1 to 6 and comprising the further step of controlling, at least for a remaining part of an overall operating time, the two internal combustion engines (8) in a synchronous manner so as to cause the two internal combustion engines (8) to rotate at the same rotation speed ($\omega_E$) in order to obtain a regular sound generation.

8. The control method according to claim 7, wherein, when the two internal combustion engines (8) are controlled in a synchronous manner so as to cause the two internal combustion engines (8) to rotate at the same rotation speed ($\omega_E$), a phase shift is imposed on the two internal combustion engines (8) such that a combustion in one cylinder (14) of the first internal combustion engine (8) always takes place between the ignition of the combustions in two cylinders (14) of the second internal combustion engine (8).

9. The control method according to claim 7 or 8, wherein, when the two internal combustion engines (8) are controlled in a synchronous manner so as to cause the two internal combustion engines (8) to rotate at the same rotation speed ($\omega_E$), a phase shift is imposed on the two internal combustion engines (8) such that the ignition of a combustion in a cylinder (14) of the first internal combustion engine (8) never takes place at the same time as the ignition of a combustion in a cylinder (14) of the second internal combustion engine (8).

10. The control method according to claim 7, wherein, when the two internal combustion engines (8) are controlled in a synchronous manner so as to cause the two internal combustion engines (8) to rotate at the same rotation speed ($\omega_E$), a phase shift is imposed on the two internal combustion engines (8) such that a combustion in a cylinder (14) of the first internal combustion engine (8) always takes place simultaneously with the ignition of a combustion in a cylinder (14) of the second internal combustion engine (8).

11. The control method according to claim 7 or 8, wherein, when the two internal combustion engines (8) are controlled in a synchronous manner so as to cause the two internal combustion engines (8) to rotate at the same rotation speed ($\omega_E$), a phase shift is imposed on the two internal combustion engines (8) such that the ignition of a combustion in one cylinder (14) of the first internal combustion engine (8) always takes place at the same time as the ignition of a combustion in a cylinder (14) of the second internal combustion engine (8).

12. A car (1) comprising:

a frame (2), which develops along a longitudinal direction (L) having a front-rear orientation;
at least two drive wheels (4);
at least one electric motor (6) connected to the two drive wheels (4);
a first generation assembly (7) comprising a first electric generator (9) and a first internal combustion engine (8) provided with a first drive shaft (11), which is mechanically connected only to the first electric generator (9) and, therefore, is mechanically independent of the drive wheels (4); and
a second generation assembly (7) comprising a second electric generator (9), which is mechanically independent of the first electric generator (9), and a second internal combustion engine (8) provided with a second drive shaft (11), which is mechanically connected only to the second electric generator (9) and, therefore, is mechanically independent of the drive wheels (4);
wherein the two internal combustion engines (8) have the same number of cylinders (14);
the car (1) is **characterized in that** it comprises a control unit (CU) configured to control, at least for part of an overall operating time, the two internal combustion engines (8) in an asynchronous manner so as to cause the two internal combustion engines (8) to rotate at different rotation speeds ($\omega_E$) in order to obtain an irregular sound generation.

Fig. 1

EP 4 714 703 A1

Fig. 2

EP 4 714 703 A1

Fig. 3

EP 4 714 703 A1

Fig. 4

EP 4 714 703 A1

Fig. 5

Fig. 6

EP 4 714 703 A1

Fig. 7

Fig. 8

Fig. 9

EP 4 714 703 A1

Fig. 10

EP 4 714 703 A1

Fig. 11

EP 4 714 703 A1

Fig. 12

27

Fig. 13

Fig. 14

EP 4 714 703 A1

Fig. 15

Europäisches
Patentamt

European
Patent Office

Office européen
des brevets

## EUROPEAN SEARCH REPORT

**Application Number**

EP 25 20 3086

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 93/07016 A1 (MANNESMANN AG [DE]) 15 April 1993 (1993-04-15) | 1,5-9,12 | INV. B60K6/24 |
| Y | * page 7, paragraph 2 - page 8, paragraph 3; figure 2 * | 2,5,6, 10,11 | B60K1/02 B60K5/08 |
| A | * page 12, paragraphs 2,3; figure 6a * | 3,4 | B60K6/40 |
| | ----- | | B60K6/46 |
| Y | DE 10 2010 007996 A1 (AUDI AG [DE]) 18 August 2011 (2011-08-18) | 10,11 | B60K7/00 B60K13/02 |
| A | * paragraphs [0011], [0038] - [0040]; figure 1 * | 1 | B60K13/04 B60K15/063 |
| | ----- | | B60W20/15 |
| Y | DE 10 2009 035559 A1 (AUDI AG [DE]) 3 February 2011 (2011-02-03) | 2,5,6 | |
| A | * paragraphs [0030], [0031]; figures 2, 3b, 4,5 * | 1 | ADD. B60K5/00 |
| | ----- | | |
| A | EP 0 249 806 A1 (MAGNET MOTOR GMBH [DE]) 23 December 1987 (1987-12-23) * page 10, paragraph 4 - page 12, paragraph 4; figure 1 * | 1-12 | |
| | ----- | | TECHNICAL FIELDS SEARCHED (IPC) |
| A | DE 10 2020 115665 A1 (IAV GMBH INGENIEURGESELLSCHAFT AUTO & VERKEHR [DE]) 16 December 2021 (2021-12-16) * figures 1a, 4a * | 1-12 | B60K B60W |
| | ----- | | |

The present search report has been drawn up for all claims

| Place of search | Date of completion of the search | Examiner |
|---|---|---|
| Munich | 14 January 2026 | Wurzer, Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 3086

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2026

| Patent document cited in search report | | Publication date | Patent family member(s) | | Publication date |
|---|---|---|---|---|---|
| WO 9307016 | A1 | 15-04-1993 | BR | 9206610 A | 17-10-1995 |
| | | | CN | 1077423 A | 20-10-1993 |
| | | | DE | 4134160 A1 | 22-04-1993 |
| | | | EP | 0607224 A1 | 27-07-1994 |
| | | | JP | H07500065 A | 05-01-1995 |
| | | | RU | 94020395 A | 27-08-1996 |
| | | | WO | 9307016 A1 | 15-04-1993 |
| DE 102010007996 A1 | | 18-08-2011 | NONE | | |
| DE 102009035559 A1 | | 03-02-2011 | DE 102009035559 A1 | | 03-02-2011 |
| | | | WO | 2011012223 A2 | 03-02-2011 |
| EP 0249806 | A1 | 23-12-1987 | AT | E71888 T1 | 15-02-1992 |
| | | | DE | 3620362 A1 | 23-12-1987 |
| | | | EP | 0249806 A1 | 23-12-1987 |
| | | | ES | 2030401 T3 | 01-11-1992 |
| DE 102020115665 A1 | | 16-12-2021 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102024000020938
- WO 9307016 A1
- DE 102010007996 A1
- DE 102009035559 A1